# EUROPEAN PATENT SPECIFICATION

(11) **EP 1 346 155 B1**
(45) Date of publication and mention of the grant of the patent: **28.11.2007**
(21) Application number: 01272376.3
(22) Date of filing: 22.12.2001
(51) Int. Cl.: F04B 39/10

(54) **VALVE ASSEMBLY FOR HERMETIC COMPRESSOR**
VENTILANORDNUNG FÜR HERMETISCHEN VERDICHTER
ENSEMBLE SOUPAPE POUR COMPRESSEUR HERMETIQUE

(30) Priority: 27.12.2000 KR 2000083010
(43) Date of publication of application: 24.09.2003
(73) Proprietor: LG Electronics, Inc., 151-721 seoul (KR)
(72) Inventor: CHO, Jae-Ho, 641-010 Changwon, Kyungsangnam-Do (KR)
(74) Representative: Ghioni, Carlo Raoul Maria
(86) International application number: PCT/KR2001/002249
(87) International publication number: WO 2002/052153

(56) References cited:
- DD-A- 110 918
- DD-A1- 274 649
- FR-A- 1 399 818
- US-A- 3 486 526

## Description

### TECHNICAL FIELD

The present invention relates to a hermetic compressor, and in particular to a valve assembly for a hermetic compressor which is capable of simplifying its structure and improving a compressing efficiency.

### BACKGROUND ART

Generally, compressors can be divided into several kinds according to compressing types, in an air conditioning apparatus required to be small and lightweight, a hermetic reciprocating compressor is mainly used.

The hermetic reciprocating compressor is constructed with an enclosed casing, a driving unit housed in the casing and generating a driving force and a compressing unit, etc. compressing a fluid by a rotational force generated by the driving unit.

The compressing unit includes a cylinder at which a fluid flows into, a piston housed in the cylinder so as to be performable a reciprocating motion, a valve assembly, etc. supplying the fluid to the cylinder and discharging the compressed fluid by being connected to the cylinder. Accordingly, the compressing unit compresses a fluid flowing into the cylinder by the reciprocating motion of the piston and discharges it through the valve assembly.

The valve assembly is constructed with a cylinder head fastened to the cylinder and having a suction/discharge hole, a suction/discharge valve installed to the cylinder head, a packing for sealing hermetically and a head cover, etc. installed to the cylinder head and having a suction channel sucking a fluid from outside and a discharge channel discharging a compressed fluid.

Because the valve assembly affects a performance of the compressor, a development of the valve assembly proceeds steadily.

In the valve assembly presented in the U.S. Pat. No. 4,723,896, a groove having a specific size is formed around a discharge hole of a cylinder head, a valve for opening/closing the discharge hole is placed inside the groove, and a valve spring for a returning operation of the valve is installed to the valve. And, a retainer fixedly maintaining positions of the valve spring and the valve is installed so as to contact with the bottom surface of the groove.

In the retainer, a clamp is inserted into a notch formed at the cylinder head in order to fix each construction part.

Other valve assemblies are presented in documents DD 110918, DD 274649, FR 1399818 and US 3486526, which substantially disclose a cylinder head installed to an opened end of a cylinder having a specific space filled with a fluid and having a suction hole and a discharge hole, a suction valve fixed to a certain surface of the cylinder head and opening/closing the suction hole, a discharge valve fixed to the other surface of the cylinder head and opening/closing the discharge hole, and a head cover fixed to the surface of the cylinder head.

However, in the conventional valve assembly, because a valve spring and a retainer, etc. are installed additionally besides base construction parts such as a cylinder head, a suction/discharge valve and a head cover, its structure is intricate due to lots of construction parts.

In addition, in the conventional valve assembly, because an additional process for forming a groove around a discharge hole of a cylinder head is required, a production cost and a production time are increased, and a productivity is lowered.

In addition, in the conventional valve assembly, a discharge valve is fixed to a cylinder head with a valve spring by a retainer, etc., a groove for inserting the valve, the valve spring and the retainer, etc. is formed at the cylinder head, because each construction part is fabricated so as to have a certain tolerance in consideration of a facility of an assembly and a fabrication error, when a discharge of a fluid is instantly performed under a high discharge pressure, a discharge valve may not operate accurately, accordingly a discharge efficiency may be lowered.

In addition, when a high pressure occurs instantly in a discharging process of a refrigerant, the discharge valve may orderly collide with the valve spring and the retainer, etc., accordingly a noise may occur.

### TECHNICAL GIST OF THE PESENT INVENTION

In order to solve the above-mentioned problems, it is an object of the present invention to provide a valve assembly for a hermetic compressor which is capable of facilitating an assembly and reducing a production cost by simplifying a structure of a valve assembly and minimizing the number of construction parts.

It is another object of the present invention to provide a valve assembly for a hermetic compressor which is capable of improving a suction and a discharge efficiencies of a compressor and improving a performance of the compressor by being operated stably under a high compressing pressure.

It is yet another object of the present invention to provide a valve assembly for a hermetic compressor which is capable of lowering a noise occurred in a compressing by minimizing a relative motion of a valve, etc. according to variation of a compressing pressure and collisions between construction parts.

The above-mentioned objects are achieved by a valve assembly for a hermetic compressor comprising the technical features disclosed by claim 1 herein appended.

The assembly for the hermetic compressor in accordance with the present invention further includes a gasket placed between the cylinder head and the head cover and preventing a leakage of the fluid.

The cylinder head is formed as a plate shape having a certain thickness endurable a pressure of the fluid pressurized inside the cylinder.

The suction valve includes a fixation portion fixed to the surface of the cylinder head, an opening/closing portion contacted to the suction hole, opening/closing the suction hole and having a diameter larger than a diameter of the suction hole and a connecting portion connected between the opening/closing portion and the fixation portion and applying a specific elastic force to the opening/closing portion in a direction contacting to the suction hole.

The fixation portion is formed so as to have a width larger than a width of the connecting portion in order to be stably fixed to the cylinder head.

The fixation portion is fixed to the surface of the cylinder head by a welding.

The connecting portion is a plate spring having a specific length and a specific width to provide a certain elastic force to the opening/closing portion within a range not disturbing a flow of the fluid flowing into the cylinder.

The opening/closing portion is formed as a circular plate shape having a diameter larger than a diameter of the suction hole.

The discharge valve includes a fixation portion fixed to the surface of the cylinder head combined with the head cover, an opening/closing portion contacted to the discharge hole, performing an opening/closing operation and having a diameter larger than a diameter of the discharge hole and a connecting portion connected between the opening/closing portion and the fixation portion and providing a certain elastic force in a direction at which the opening/closing portion is contacted to the suction hole.

The fixation portion is formed so as to have a width larger than a width of the connecting portion in order to be stably fixed to the surface of the cylinder head.

The fixation portion is fixed to the surface of the cylinder head by a welding.

The connecting portion is formed so as to have a width larger than a width of the connecting portion of the suction valve.

The connecting portion is formed so as to have a length shorter than a length of the connecting portion of the suction valve.

The opening/closing portion is formed as a circular plate shape having a diameter larger than a diameter of the discharge hole.

The head cover includes a suction space at which the fluid flows into from outside by connecting to the suction hole, a discharge space separated from the suction space by a septum wall, connected to the discharge hole and discharging the compressed fluid to outside and a fixation surface formed on the front surface and fixing the fixation portion of the discharge valve.

The head cover further includes a supporting portion formed by being extended from the fixation surface along the discharge valve and restricting an opening range of the discharge valve.

The supporting portion is constructed with a first supporting portion in order to support the connecting portion of the discharge valve and a second supporting portion extended from the first supporting portion so as to be inclined at a certain angle in order to restrict an opening range of the opening/closing portion of the discharge valve.

A valve assembly for a hermetic compressor in accordance with another embodiment of the present invention includes a cylinder head installed to an opened side of a cylinder having a certain space filled with a fluid and having a suction hole and a discharge hole, a suction valve fixed to the side of the cylinder head and opening/closing the suction hole, a discharge valve fixed to the other side of the cylinder head and opening/closing the discharge hole, a head cover fixed to the side of the cylinder head and having a suction channel at which the fluid is sucked and a discharge channel at which the fluid is discharged, a first reinforcing member placed between the cylinder head and the cylinder in order to reinforce the cylinder head and having a space for housing the suction valve, and a second reinforcing member placed between the cylinder head and the head cover in order to reinforce the cylinder head and having a space for housing the discharge valve.

The first reinforcing member is formed as a plate shape including a suction valve installing portion punched so as to have the same shape as the suction valve in order to place the suction valve and a connecting hole connected to the discharge hole of the cylinder head.

The second reinforcing member is formed as a plate shape including a discharge valve installing portion punched so as to have the same shape as the discharge valve in order to place the discharge , valve and a connecting hole connected to the suction hole of the cylinder head.

### BRIEF DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a transverse sectional view illustrating a hermetic compressor in accordance with the present invention;
Figure 2 is a disassembled perspective view illustrating a valve assembly for a hermetic compressor in accordance with the present invention;
Figure 3 is a front view illustrating a suction valve of a valve assembly in accordance with the present invention; .
Figure 4 is a front view illustrating a discharge valve of a valve assembly in accordance with the present invention;
Figure 5 is a sectional view taken along the line A-A of Figure 2;
Figure 6 is a front view illustrating a first supporting member of a valve assembly in accordance with the present invention; and
Figure 7 is a front view illustrating a second supporting member of a valve assembly in accordance with the present invention.

### DETAILED DESCRIPTION OF THE INVENTION

Hereinafter, embodiments of a valve assembly for a hermetic compressor in accordance with the present invention will be described with reference to accompanying drawings.

There can be a plurality of embodiments of the present invention, hereinafter the preferred embodiment will be described.

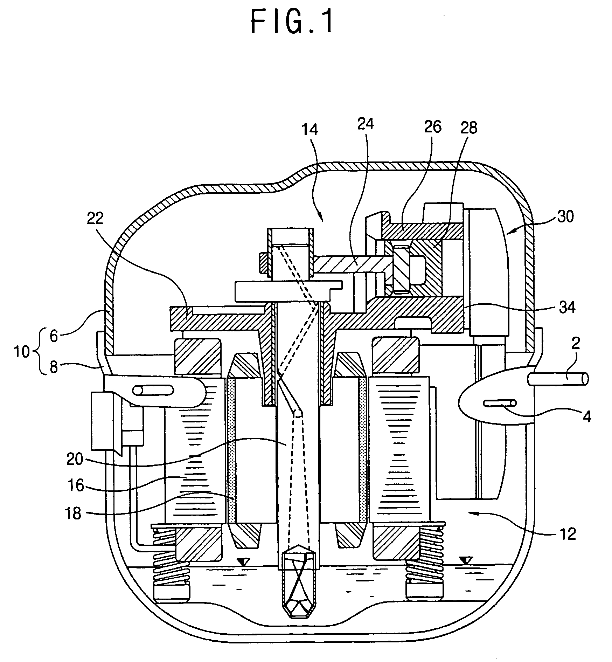

Figure 1 is a transverse sectional view illustrating a hermetic compressor in accordance with the present invention.

A hermetic compressor in accordance with the present invention includes an enclosed casing 10 at which a suction pipe 2 and a discharge pipe 4 are respectively connected, a driving unit 12 housed in the lower portion of the casing 10 and generating a rotational force, and a compressing unit 14 arranged at the upper portion of the casing 10, compressing a fluid sucked into the suction pipe 2 with the rotational force generated by the driving unit 10 and discharging the fluid to the discharge pipe 4.

In the casing 10, an upper casing 6 and a lower casing 8 are combined each other and sealed in order to prevent a leakage of the fluid flowing into.

The driving unit 12 is fixed inside the casing 10 and is constructed with a stator 16 receiving power from outside, a rotator 18 placed at the side (toward the center of the driving unit 12) of the stator 16 so as to have a certain distance from the stator 16 and being rotated by operating mutually with the stator 16 when power is applied to the stator 16, and a crankshaft 20 rotating together with the rotator 18 by being fixed to the rotator 18 and rotatively supported by a frame 22 fixed to the casing 10.

The compressing unit 14 includes a connecting rod 24 connected to the upper end of the crankshaft 20 and performing a linear reciprocating motion in a rotational motion of the crankshaft 20, a cylinder 26 fixed to the upper side surface of the frame 22 and having a certain space at which a fluid flows into, a piston 28 performing a linear motion together with the connecting rod 24 by being connected to the connecting rod 24 and placed so as to be slide-movable inside the cylinder 26 in order to compress the fluid flowing into the cylinder 26, and a valve assembly 30 installed to the side surface of the cylinder 26, supplying the fluid inside the cylinder 26 and discharging the fluid compressed by the piston 28.

The connecting rod 24 is connected to an eccentric pin 32 formed at the upper end of the crankshaft 20 and performs a linear reciprocating motion in the rotational motion of the crankshaft 20.

The cylinder 26 has a certain space filled with a fluid, the connecting rod 24 penetrates through the side of the cylinder 26 so as to be sealed, and the valve assembly 30 is installed to the other opened side of the cylinder 26.

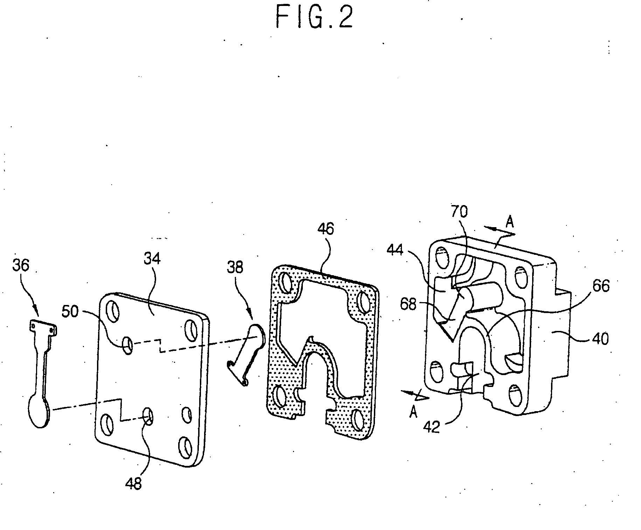

Figure 2 is a disassembled perspective view illustrating a valve assembly for a hermetic compressor in accordance with the present invention.

The valve assembly 30 includes a cylinder head 34 installed to the opened side of the cylinder 26, a suction valve 36 installed to the side of the cylinder head 34 and performing an opening/closing operation about a sucked fluid, a discharge valve 38 installed to the other side of the cylinder head 34 and performing an opening/closing operation about a discharged fluid, a head cover 40 fixed to the cylinder head 34 and having a suction space 42 at which a fluid is sucked into and a discharge space 44 at which a fluid is discharged, and a gasket 46 inserted into a connecting portion between the head cover 40 and the cylinder head 34 and performing a sealing operation.

In the cylinder head 34 formed as a flat plate having a certain thickness, a suction hole 48 at which a fluid is sucked into the cylinder 26 is formed at a portion at which the suction valve is fixed, and a discharge hole 50 at which a fluid inside the cylinder 26 is discharged is formed at a portion at which the discharge valve 38 is fixed.

In a design of the cylinder head 34, a dead volume influencing an efficiency of a compressor has to be considered in the first place.

The term "dead volume" means a volume of the cylinder 26 and a volume of the discharge hole 50 when the piston 28 is at a top dead center, in other words, it means a quantity of the rest of the fluid which has not been discharged when the piston 28 reaches the top dead center.

When the dead volume is increased, a suction operation suctioning new fluid into the cylinder 26 is obstructed, accordingly an efficiency of the whole compressor is lowered. Herein, a volume of the discharge hole 50 is increased according to an increase of a thickness of the cylinder head 34, accordingly a dead volume is increased.

Accordingly, it is preferable to form the cylinder head 34 thinly to the utmost within a range endurable a pressure of a sucked/discharged fluid.

Because the cylinder head 34 is fabricated with a material having an improved strength and forming a groove is unnecessary, etc., the cylinder head 34 can be formed thinly to the utmost within a range endurable the fluid pressure, therefore it is possible to eliminating a performance lowering factor of the compressor.

The suction valve 36 formed as a strip type having a certain elastic force in a direction contacted to the suction hole 48 is fixed to the side of the cylinder head 34 installed to the cylinder 26.

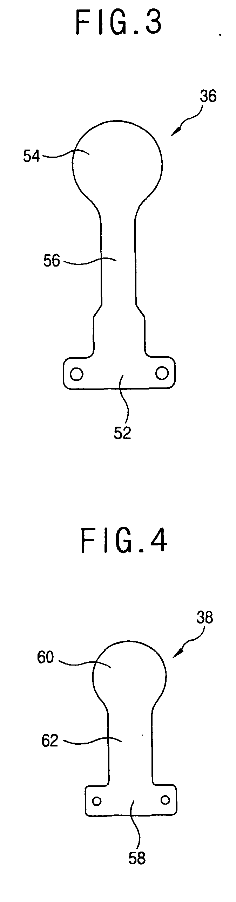

In more detail, as depicted in Figure 3, the suction valve 36 includes a fixation portion 52 fixed to the surface of the cylinder head 34, an opening/closing portion 54 contacted to the suction hole 48 and opening/closing the suction hole 48, and a connecting portion 56 connecting the opening/closing portion 54 and the fixation portion 52.

Herein, the fixation portion 52 formed so as to have a wide area at the connecting portion 56 in order to be stably fixed to the cylinder head 34 is fixed to the surface of the cylinder head 34 by a welding, etc.

Besides a welding any method can be applied to fixing the fixation portion 52 to the cylinder head 34.

The opening/closing portion 54 is formed as a circular flat plate shape having a diameter larger than a diameter of the suction hole 48.

And, the connecting portion 56 between the fixation portion 52 and the opening/closing portion 54 is formed as a plate shape having a certain length (L1) and a certain width (W1) so as to provide a certain elastic force in order to make the opening/closing portion 54 contact to the suction hole 48.

Herein, the elastic force of the connecting portion 56 is varied according to the length (L1) between the fixation portion 52 and the opening/closing portion 54. In more detail, because a distance between the fixation portion 52 as a supporting portion and the opening/closing portion 54 performing the opening/closing operation is increased as the length (L1) of the connecting portion 56 is lengthened, the elastic force provided to the opening/closing portion 54 is decreased, on the contrary, the elastic force provided to the opening/closing portion 54 is increased as the length (L1) of the connecting portion 56 is shortened.

The connecting portion 56 of the suction valve 36 is formed as a shape having the width (W1) smaller than a width of the opening/closing portion 54 and the length (L1) longer than a length of the opening/closing portion 54 in order to make the opening/closing portion 54 perform the opening/closing operation sensitively when a pressure by the fluid is applied through the suction hole 48.

The discharge valve 38 is fixed to the surface of the cylinder head 34 at which the head cover 40 is installed and is formed as a strip type having a certain elastic force in a direction contacting to the discharge hole 50, accordingly the discharge valve 38 is operated in a direction opening the discharge hole 50 and discharges the fluid outside when the fluid flowing into the cylinder 26 is pressurized according to the linear motion of the piston 28.

In more detail, as depicted in Figure 3 4, the discharge valve 38 is constructed with a fixation portion 58 fixed to the surface of the cylinder head 34, an opening/closing portion 60 contacted to the discharge hole 50 and performing the opening/closing operation and a connecting portion 62 connecting the opening/closing portion 60 and the fixation portion 58.

Herein, the fixation portion 58 is formed by being extended from the end portion of the connecting portion 62 so as to have a wider contact area in order to be stably fixed to the cylinder head34, and is fixed to the surface of the cylinder head 34 by a method such as a welding, etc.

Besides the welding, any method can be applied to fixing the fixation portion 58 to the surface of the cylinder head 34.

The opening/closing portion 60 is formed as a circular flat plate shape having a diameter larger than a diameter of the discharge hole 50 so as to enclose the discharge hole 50 easily.

And, the connecting portion 62 connecting the fixation portion 58 and the opening/closing portion 60 is formed as a plate type having a certain length in order to have a certain elastic force for making the opening/closing portion 60 contact to the discharge hole 50.

Because a pressure applied to the discharge hole 50 is larger than a pressure applied to the suction hole 48, the connecting portion 62 of the discharge valve 38 is formed so as to provide a larger elastic force to the opening/closing portion 60 than the connecting portion 56 of the suction valve 36.

Because the connecting portion 62 of the discharge valve 38 has a length (L2) shorter than a length of the connecting portion 56 of the suction valve 36 and a width (W2) larger than a width of the connecting portion 56 of the suction valve 36, the elastic force acting on the opening/closing portion 60 of the discharge valve 38 is larger than the elastic force acting on the opening/closing portion 54 of the suction valve 36.

As depicted in Figure 4 5, the head cover 40 has a suction space 42 connected to the suction hole 48 and filled with a fluid sucked from outside and a discharge space 44 connected to the discharge hole 50 and discharging the compressed fluid outside. And, a fixation surface 64 at which the fixation portion 52 of the discharge valve 38 is tightly contacted and fixed is formed at the front surface of the head cover 40 fastened to the cylinder head 34.

The suction space 42 and the discharge space 44 are divided by a septum wall 66 inside the head cover 40.

In addition, the head cover further includes a supporting portion extended from the fixation surface 64 toward the discharge valve 38 and limiting an opening range of the discharge valve 38.

As depicted in Figure 4 5, the supporting portion is constructed with a first supporting portion 68 limiting a bending range of the connecting portion 62 of the discharge valve 38 and a second supporting portion 70 extended from the first supporting portion 68 and limiting an opening range of the opening/closing portion 60 of the discharge valve 38. And, the supporting portion is formed so as to be inclined at a certain angle (θ) from the first supporting portion 68 to the second supporting portion 70.

As described above, when the discharge valve 38 is bent by an instant high pressure, the first and the second supporting portions 68, 70 can prevent damage of the discharge valve 38 by limiting a deformation range of the discharge valve 38, make the discharge valve 38 return to a home position instantly and make the discharge valve 38 perform the accurate operation.

And, the first and the second supporting portions 68, 70 absorb an impact occurred by the fluid discharged with a high pressure through the discharge hole 50, transmit the impact to all over the head cover 40, accordingly a noise generated in the discharge space of the head cover 40 due to the rapid diffusion of the fluid can be lowered.

In addition, in discharging of the fluid, the discharge valve 38 contacts to the first and the second supporting portions 68, 70, a noise due to vibration, etc. of the discharge valve 38 due to the discharge pressure can be lowered.

It is preferable to form the area of the first and the second supporting portions 68, 70 so as to coincide with or be larger than the area of the discharge valve 38.

The gasket 46 is tightly contacted between the cylinder head 34 and the head cover 40 in order to prevent a leakage of the fluid, it has the same shape as the shape of the front surface of the head cover 40.

In the valve assembly 30, reinforcing members 72, 74 for respectively reinforcing a strength of the cylinder head 34 between the cylinder head 34 and the head cover 40 or the cylinder head 34 and the cylinder 26 and housing the suction valve 36 and the discharge valve 38 can be additionally formed.

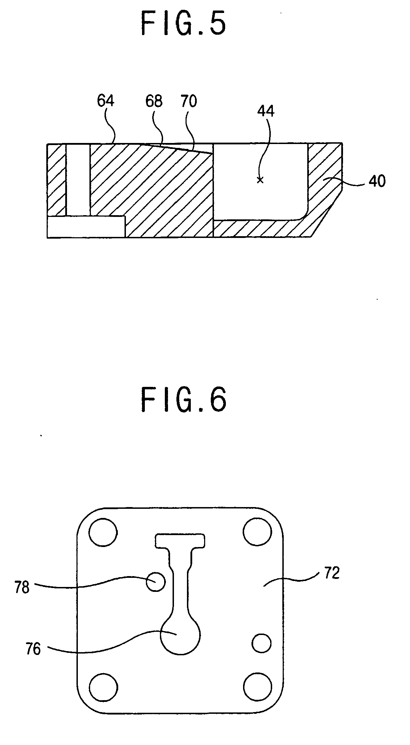

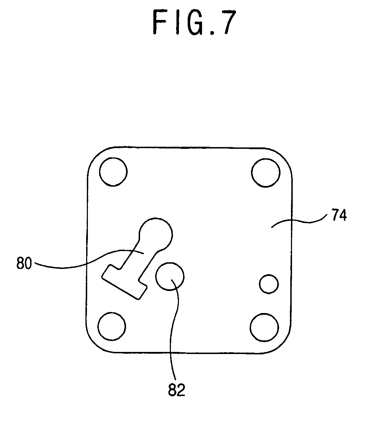

As depicted in Figures 6 and 7, the reinforcing members 72, 74 are formed as a relatively thin plate shape so as not to increase a total size of the valve assembly, the first reinforcing member 72 is placed between the cylinder head 34 and the cylinder 26, and the second reinforcing member 74 is placed between the cylinder head 34 and the head cover 40.

As depicted in Figure 6, a suction valve installing portion 76 having the same shape as the suction valve 36 penetrates through the first reinforcing member 72 in order to place the suction valve 36, and a connecting hole 78 connected to the discharge hole 50 of the cylinder head 34 is formed at the side of the first reinforcing member 72.

As depicted in Figure 7, a discharge valve installing portion 80 having the same shape as the discharge valve 38 or larger than the discharge valve 38 is formed in order to place the discharge valve 38, and a connecting hole 82 connected to the suction hole 48 of the cylinder head 34 is formed at the side of the second reinforcing member 74.

The assembly process and the operation of the valve assembly of the hermetic compressor in accordance with the present invention will be described.

First, in the assembly process of the valve assembly, the suction valve 36 and the discharge valve 38 are respectively installed to the both sides of the cylinder head 34. In more detail, the fixation portions 52, 58 of the suction valve 36 and the discharge valve 38 are respectively fixed to the both sides of the cylinder head 34 by a method such as a welding, etc. Afterward, the cylinder head 34 at which the suction valve 36 and the discharge valve 38 are fixed is placed at the opened side of the cylinder 26, and the gasket 46 and the head cover 40 are combined with the other side of the cylinder head 34 by fastening bolts (not shown).

And, when the first and the second reinforcing members 72, 74 are additionally installed, the first and the second reinforcing members 72, 74 are respectively installed to the both sides of the cylinder head 34.

After completing the assembly, when power is applied to the driving unit 12, the crankshaft 20 is rotated, and the connecting rod 24 performs the linear reciprocating motion. Then, the piston 28 connected to the connecting rod 24 performs the compressing operation of the fluid while performing the linear reciprocating motion inside the cylinder 26.

In more detail, when the piston 28 moves linearly in the left direction in Figure 1, the discharge hole 50 formed at the cylinder head 34 is closed by the elastic force of the discharge valve 38, the suction valve 36 is opened, the suction hole 48 is opened, accordingly the fluid is sucked into the cylinder 26. Herein, the fluid flows into the cylinder 26 through the suction space 42 of the head cover 40 and the suction hole 48.

In that state, when the crankshaft 20 is rotated more, the piston 28 moves linearly in the right direction in Figure 1, the fluid sucked into the cylinder 26 is pressurized by the push force of the piston 28 and is discharged outside through the discharge hole 50. Herein, when the piston 28 is moved in the right direction, the suction valve 36 is operated in a direction closing the suction hole 48, the discharge valve 38 is operated in a direction opening the discharge hole 50, accordingly the pressed fluid is discharged through the discharge hole 50.

Herein, when the discharge valve 38 is opened, because it contacts to the supporting portions 68, 70 formed at the head cover 40, the opening range is limited, and a noise due to vibration of the discharge valve 38 caused by the discharge pressure can be lowered.

### INDUSTRIAL APPLICABILITY

In a valve assembly for a hermetic compressor in accordance with the present invention, because a suction valve and a discharge valve are respectively and directly fixed to the both sides of a cylinder head, an additional part for fixing the suction valve and the discharge valve is unnecessary, it is possible to simplify a structure and reduce the number of components, accordingly a production cost can be reduced.

In addition, forming a groove, etc. at a cylinder head in order to house a suction valve and a discharge valve is unnecessary, it is possible to simplify an assembly process, accordingly a productivity can be improved.

In addition, because a supporting portion for supporting a discharge valve in opening operation of the discharge valve is formed at a head cover, it is possible to prevent vibration of the discharge valve due to a discharge pressure of a fluid in the opening operation, accordingly the vibration due to the discharge pressure of the fluid can be minimized.

## Claims

1. A valve assembly for a hermetic compressor, comprising:
a cylinder head **(34)** installed to an opened end of a cylinder **(26)** having a specific space filled with a fluid and having a suction hole **(48)** and a discharge hole **(50);**
a suction valve **(36)** fixed to a certain surface of the cylinder head **(34)** and opening/closing the suction hole **(48);**
a discharge valve **(38)** fixed to the other surface of the cylinder head **(34)** and opening/closing the discharge hole (50); and
a head cover **(40)** fixed to the surface of the cylinder head **(34);**
**characterised in that** the head cover **(40)** includes:
a suction space **(42),** connected to the suction hole **(48),** at which a fluid is sucked;
a discharge space **(44),** connected to the discharge hole **(50),** at which a fluid is discharged;
the discharging space **(44)** being separated from the suction space **(42)** by a septum wall **(66);**
a fixation surface **(64)** formed on a front surface of the head cover **(40)** and fixing a fixation portion **(58)** of the discharge valve **(38);** and
a supporting portion formed by being extended from the fixation surface **(64)** along the discharge valve **(38)** and restricting an opening range of the discharge valve **(38).**

2. The assembly for the hermetic compressor according to claim 1, further comprising:
a gasket **(46)** placed between the cylinder head **(34)** and the head cover **(40)** and preventing a leakage of the fluid.

3. The assembly for the hermetic compressor according to claim 1, wherein the cylinder head **(34)** is formed as a plate shape having a certain thickness endurable a pressure of the fluid pressurized inside the cylinder.

4. The assembly for the hermetic compressor according to claim 1, wherein the suction valve **(36)** includes:
a fixation portion **(52)** fixed to the surface of the cylinder head **(34);**
an opening/closing portion **(54)** contacted to the suction hole **(48),** opening/closing the suction hole **(48)** and having a diameter larger than a diameter of the suction hole; and
a connecting portion **(56)** connected between the opening/closing portion **(54)** and the fixation portion **(52)** and applying a specific elastic force to the opening/closing portion **(54)** in a direction contacting to the suction hole **(48).**

5. The assembly for the hermetic compressor according to claim 4, wherein the fixation portion **(52)** is formed so as to have a width larger than a width of the connecting portion **(56)** in order to be stably fixed to the cylinder head.

6. The assembly for the hermetic compressor according to claim 4 or 5, wherein the fixation portion **(52)** is fixed to the surface of the cylinder head **(34)** by a welding.

7. The assembly for the hermetic compressor according to claim 4, wherein the connecting portion **(56)** is a plate spring having a specific length and a specific width to provide a certain elastic force to the opening/closing portion **(54)** within a range not disturbing a flow of the fluid flowing into the cylinder.

8. The assembly for the hermetic compressor according to claim 4, wherein the opening/closing portion **(54)** is formed as a circular plate shape having a diameter larger than a diameter of the suction hole **(48).**

9. The assembly for the hermetic compressor according to claim 1, wherein the discharge valve **(38)** includes:
said fixation portion **(58)** fixed to the surface of the cylinder head **(34)** combined with the head cover **(40);**
an opening/closing portion **(60)** contacted to the discharge hole **(50),** performing an opening/closing operation and having a diameter larger than a diameter of the discharge hole **(50);** and
a connecting portion **(62)** connected between the opening/closing portion **(60)** and the fixation portion **(58)** and providing a certain elastic force in a direction at which the opening/closing portion **(60)** is contacted to the suction hole **(48).**

10. The assembly for the hermetic compressor according to claim 9, wherein the fixation portion **(58)** is formed so as to have a width larger than a width of the connecting portion **(62)** in order to be stably fixed to the surface of the cylinder head **(34).**

11. The assembly for the hermetic compressor according to claim 9 or 10, wherein the fixation portion **(58)** is fixed to the surface of the cylinder head **(34)** by a welding.

12. The assembly for the hermetic compressor according to claim 9, wherein the connecting portion **(62)** is formed so as to have a width larger than a width of the connecting portion **(56)** of the suction valve **(36).**

13. The assembly for the hermetic compressor according to claim 9 or 12, wherein the connecting portion **(62)** is formed so as to have a length shorter than a length of the connecting portion **(56)** of the suction valve **(36).**

14. The assembly for the hermetic compressor according to claim 9, wherein the opening/closing portion **(60)** is formed as a circular plate shape having a diameter larger than a diameter of the discharge hole **(50).**

15. The assembly for the hermetic compressor according to claim 1, wherein the supporting portion includes a first supporting portion **(68)** for supporting a connecting portion **(62)** of the discharge valve **(38)** and a second supporting portion **(70)** extended from the first supporting portion **(68)** so as to be inclined at a certain angle for restricting an opening range of a opening/closing portion **(60)** of the discharge valve **(38).**

16. The assembly for the hermetic compressor according to claim 1, comprising:
a first reinforcing member **(72)** placed between the cylinder head **(34)** and the cylinder **(26)** in order to reinforce the cylinder head **(34)** and having a space for housing the suction valve **(36);** and
a second reinforcing member **(74)** placed between the cylinder head **(34)** and the head cover **(40)** in order to reinforce the cylinder head **(34)** and having a space for housing the discharge valve **(38).**

17. The assembly for the hermetic compressor according to claim 16, wherein the first reinforcing member **(72)** is formed as a plate shape including a suction valve installing portion **(76)** punched so as to have the same shape as the suction valve **(36)** in order to place the suction valve **(36)** and a connecting hole **(78)** connected to the discharge hole **(50)** of the cylinder head **(34).**

18. The assembly for the hermetic compressor according to claim 16, wherein the second reinforcing member **(74)** is formed as a plate shape including a discharge valve installing portion **(80)** punched so as to have the same shape as the discharge valve **(38)** in order to place the discharge valve **(38)** and a connecting hole **(82)** connected to the suction hole **(48)** of the cylinder head **(34).**

## Patentansprüche

1. Ventilanordnung für einen hermetischen Verdichter, die
einen an einem offenen Ende eines Zylinders **(26)** angeordneten Zylinderkopf **(34)** mit einem bestimmten mit einem Fluid gefüllten Raum sowie mit einer Ansaugöffnung **(48)** und einer Ablassöffnung **(50),**
ein an einer bestimmten Oberfläche des Zylinderkopfs **(34)** befestigtes Ansaugventil **(36),** das die Ansaugöffnung **(48)** öffnet/schließt,
ein an der anderen Oberfläche des Zylinderkopfs **(34)** befestigtes Auslassventil **(38),** das die Ablassöffnung **(50)** öffnet/schließt, sowie
einen an der Oberfläche des Zylinderkopfs **(34)** befestigten Kopfdeckel **(40)** umfasst, **dadurch gekennzeichnet, dass** der Kopfdeckel **(40)**
einen mit der Ansaugöffnung **(48)** verbundenen Ansaugraum **(42),** worin ein Fluid angesaugt wird,
einen mit der Ablassöffnung **(50)** verbundenen Auslassraum **(44),** worin ein Fluid ausgelassen wird, welcher Auslassraum **(44)** vom Ansaugraum **(42)** durch eine Trennwand **(66)** getrennt ist,
eine an einer Stirnfläche des Kopfdeckels **(40)** geformte Befestigungsoberfläche **(64),** die einen Befestigungsteil **(58)** des Auslassventils **(38)** bildet, sowie
einen Trägerteil umfasst, der durch Verlängerung der Befestigungsoberfläche **(64)** entlang dem Auslassventil **(38)** gebildet ist, und eine Öffnungsweite des Auslassventils **(38)** verengt.

2. Ventilanordnung für den hermetischen Verdichter nach Anspruch 1, die ferner
eine Dichtung **(46)** umfasst, die zwischen dem Zylinderkopf **(34)** und dem Kopfdeckel **(40)** angeordnet ist, und eine Fluidleckage verhindert.

3. Ventilanordnung für den hermetischen Verdichter nach Anspruch 1, wobei der Zylinderkopf **(34)** nach Art einer Platte mit einer gewissen Dicke ausgebildet ist, die den Druck eines innerhalb des Zylinders unter Druck gesetzten Fluids erträgt.

4. Ventilanordnung für den hermetischen Verdichter nach Anspruch 1, wobei das Ansaugventil **(36)**
einen an der Oberfläche des Zylinderkopfs **(34)** befestigten Befestigungsteil **(52),**
einen dicht an die Ansaugöffnung **(48)** angrenzenden Öffnungs-/Schließungsteil **(54),** der die Ansaugöffnung **(48)** öffnet/schließt, und einen Durchmesser aufweist, der größer als der Durchmesser der Ansaugöffnung ist, und
einen Verbindungsteil **(56)** umfasst, der zwischen dem Öffnungs-/Schließungsteil **(54)** und dem Befestigungsteil **(52)** dazwischengelegt ist, und eine bestimmte Federkraft auf den Öffnungs-/Schließungsteil **(54)** in Richtung auf die Ansaugöffnung **(48)** ausübt.

5. Ventilanordnung für den hermetischen Verdichter nach Anspruch 4, wobei der Befestigungsteil **(52)** derart ausgebildet ist, dass er eine Breite aufweist, die größer als die Breite des Verbindungsteils **(56)** ist, sodass er stabil an dem Zylinderkopf befestigt ist.

6. Ventilanordnung für den hermetischen Verdichter nach Anspruch 4 oder 5, wobei der Befestigungsteil **(52)** an der Oberfläche des Zylinderkopfs **(34)** durch Schweißen befestigt ist.

7. Ventilanordnung für den hermetischen Verdichter nach Anspruch 4, wobei der Verbindungsteil **(56)** eine Blattfeder mit einer bestimmten Länge und einer bestimmter Breite ist, um eine gewisse Federkraft auf den Öffnungs-/Schließungsteil **(54)** innerhalb eines Bereiches auszuüben, der eine Strömung des in den Zylinder hinein fließenden Fluids nicht behindert.

8. Ventilanordnung für den hermetischen Verdichter nach Anspruch 4, wobei der Öffnungs-/Schließungsteil **(54)** nach Art einer Rundplatte mit einem Durchmesser ausgebildet ist, der größer als der Durchmesser der Ansaugöffnung **(48)** ist.

9. Ventilanordnung für den hermetischen Verdichter nach Anspruch 1, wobei das Auslassventil (38)
den **besagten** Befestigungsteil **(58),** der an der Oberfläche des Zylinderkopfs **(34)** mit dem Kopfdeckel **(40)** zusammengefügt befestigt ist,
einen dicht an die Ablassöffnung **(50)** angrenzenden Öffnungs-/Schließungsteil **(60),** der einen Öffnungs-/Schließungsvorgang durchführt, und einen Durchmesser aufweist, der größer als der Durchmesser der Ablassöffnung **(50)** ist, sowie
einen Verbindungsteil **(62)** umfasst, der zwischen dem Öffnungs-/Schließungsteil **(60)** und dem Befestigungsteil **(58)** dazwischengelegt ist, und eine bestimmte Federkraft in einer Richtung ausübt, in welcher sich der Öffnungs-/Schließungsteil **(60)** in Berührung mit der Ansaugöffnung **(48)** befindet.

10. Ventilanordnung für den hermetischen Verdichter nach Anspruch 9, wobei der Befestigungsteil **(58)** derart ausgebildet ist, dass er eine Breite aufweist, die größer als die Breite des Verbindungsteils **(62)** ist, sodass er stabil an der Oberfläche des Zylinderkopfs **(34)** befestigt ist.

11. Ventilanordnung für den hermetischen Verdichter nach Anspruch 9 oder 10, wobei der Befestigungsteil **(58)** an der Oberfläche des Zylinderkopfs **(34)** durch Schweißen befestigt ist.

12. Ventilanordnung für den hermetischen Verdichter nach Anspruch 9, wobei der Befestigungsteil **(62)** derart ausgebildet ist, dass er eine Breite aufweist, die größer als die Breite des Verbindungsteils **(56)** des Ansaugventils **(36)** ist.

13. Ventilanordnung für den hermetischen Verdichter nach Anspruch 9 oder 12, wobei der Befestigungsteil **(62)** derart ausgebildet ist, dass er eine Länge aufweist, die kleiner als die Länge des Verbindungsteils **(56)** des Ansaugventils **(36)** ist.

14. Ventilanordnung für den hermetischen Verdichter nach Anspruch 9, wobei der Öffnungs-/Schließungsteil (60) nach Art einer Rundplatte mit einem Durchmesser ausgebildet ist, der größer als der Durchmesser der Ablassöffnung (50) ist.

15. Ventilanordnung für den hermetischen Verdichter nach Anspruch 1, wobei der Trägerteil einen ersten Trägerteil **(68) zum Tragen** eines Verbindungsteils **(62)** des Ablassventils **(38)** sowie einen zweiten Trägerteil **(70)** umfasst, der sich aus dem ersten Trägerteil **(68)** derart erstreckt, dass er unter einem gewissen Winkel geneigt ist, um den Öffnungsbereich des Öffnungs-/Schließungsteils **(60)** des Ablassventils **(38) zu verengen.**

16. Ventilanordnung für den hermetischen Verdichter nach Anspruch 1, die
ein erstes zwischen dem Zylinderkopf **(34)** und dem Zylinder **(26)** angeordnetes Verstärkungselement **(72),** das für die Verstärkung des Zylinderkopfs **(34)** bestimmt ist, und einen Raum zur Aufnahme des Ansaugventils **(36)** aufweist, sowie
ein zweites zwischen dem Zylinderkopf **(34)** und dem Kopfdeckel **(40)** angeordnetes Verstärkungselement **(74)** umfasst, das für die Verstärkung des Zylinderkopfs **(34)** bestimmt ist, und einen Raum zur Aufnahme des Ablassventils **(38)** aufweist.

17. Ventilanordnung für den hermetischen Verdichter nach Anspruch 16, wobei das erste Verstärkungselement **(72)** nach Art einer Platte ausgebildet ist, die einen Montageteil **(76)** für das Ansaugventil umfasst, der derart lochgestanzt ist, dass er das selbe Profil wie das Ansaugventil **(36)** hat, um das Ansaugventil **(36)** und eine Verbindungsöffnung **(78)** dicht an die Ablassöffnung **(50)** des Zylinderkopfs **(34)** angrenzend anordnen zu können.

18. Ventilanordnung für den hermetischen Verdichter nach Anspruch 16, wobei das zweite Verstärkungselement **(74)** nach Art einer Platte ausgebildet ist, die einen Montageteil **(80)** für das Auslassventil umfasst, der derart lochgestanzt ist, dass er das selbe Profil wie das Auslassventil **(38)** hat, um das Auslassventil **(38)** und eine Verbindungsöffnung **(82)** dicht an die Ansaugöffnung **(48)** des Zylinderkopfs **(34)** angrenzend anordnen zu können.

## Revendications

1. Ensemble soupape pour compresseur hermétique, comprenant:
- un fond de cylindre (34) installé à une extrémité ouverte d'un cylindre (26) ayant un espace spécifique rempli d'un fluide et ayant un trou d'aspiration (48) et un trou de décharge (50);
- une soupape d'aspiration (36) fixée à une certaine surface du fond de cylindre (34) et ouvrant/fermant le trou d'aspiration (48);
- une soupape de décharge (38) fixée à l'autre surface du fond de cylindre (34) et ouvrant/fermant le trou de décharge (50); et
- une couverture de fond (40) fixée à la surface du fond de cylindre (34);
**caractérisé en ce que** la couverture de fond (40) comporte:
- un espace d'aspiration (42), relié au trou d'aspiration (48), où un fluide est aspiré;
- un espace de décharge (44), relié au trou de décharge (50), où un fluide est déchargé;
- l'espace de décharge (44) étant séparé de l'espace d'aspiration (42) par une cloison (66);
- une surface de fixation (64) formée sur une surface avant de la couverture de fond (40) et fixant une portion de fixation (58) de la soupape de décharge (38); et
- une portion de support dont la formation prévoit qu'elle s'étende depuis la surface de fixation (64) le long de la soupape de décharge (38), et qu'elle limite une gamme d'ouverture de la soupape de décharge (38).

2. Ensemble pour le compresseur hermétique selon la revendication 1, comprenant en outre:
- une garniture (46) mise entre le fond de cylindre (34) et la couverture de fond (40) et empêchant la fuite du fluide.

3. Ensemble pour le compresseur hermétique selon la revendication 1, dans lequel le fond de cylindre (34) est réalisé sous forme d'une plaque ayant une certaine épaisseur en mesure de supporter une pression du fluide pressurisé à l'intérieur du cylindre.

4. Ensemble pour le compresseur hermétique selon la revendication 1, dans lequel la soupape d'aspiration (36) comporte:
- une portion de fixation (52) fixée à la surface du fond de cylindre (34);
- une portion d'ouverture/fermeture (54) mise en contact avec le trou d'aspiration (48), ouvrant/fermant le trou d'aspiration (48) et ayant un diamètre plus large qu'un diamètre du trou d'aspiration; et
- une portion de liaison (56) reliée entre la portion d'ouverture/fermeture (54) et la portion de fixation (52) et appliquant une force élastique spécifique à la portion d'ouverture/fermeture (54) dans une direction de mise en contact avec le trou d'aspiration (48).

5. Ensemble pour le compresseur hermétique selon la revendication 4, dans lequel la portion de fixation (52) est formée de manière à avoir une largeur supérieure à la largeur de la portion de liaison (56) de sorte qu'elle est fixée d'une façon stable au fond de cylindre.

6. Ensemble pour le compresseur hermétique selon la revendication 4 ou 5, dans lequel la portion de fixation (52) est fixée à la surface du fond de cylindre (34) par une soudure.

7. Ensemble pour le compresseur hermétique selon la revendication 4, dans lequel la portion de liaison (56) est un ressort à lame ayant une longueur spécifique et une largeur spécifique pour fournir une certaine force élastique à la portion d'ouverture/fermeture (54) dans une gamme qui ne gêne pas un écoulement du fluide s'écoulant dans le cylindre.

8. Ensemble pour le compresseur hermétique selon la revendication 4, dans lequel la portion d'ouverture/fermeture (54) est réalisée sous forme d'une plaque circulaire ayant un diamètre plus large qu'un diamètre du trou d'aspiration (48).

9. Ensemble pour le compresseur hermétique selon la revendication 1, dans lequel la soupape de décharge (38) comporte:
- une dite portion de fixation (58) fixée à la surface du fond de cylindre (34) combinée avec la couverture de fond (40);
- une portion d'ouverture/fermeture (60) mise en contact avec le trou de décharge (50), effectuant une opération d'ouverture/fermeture et ayant un diamètre plus large qu'un diamètre du trou de décharge (50); et
- une portion de liaison (62) reliée entre la portion d'ouverture/fermeture (60) et la portion de fixation (58) et fournissant une certaine force élastique dans une direction à laquelle la portion d'ouverture/fermeture (60) est mise en contact avec le trou d'aspiration (48).

10. Ensemble pour le compresseur hermétique selon la revendication 9, dans lequel la portion de fixation (58) est formée de manière à avoir une largeur supérieure à une largeur de la portion de liaison (62) dans le but d'être fixée d'une façon stable à la surface du fond de cylindre (34).

11. Ensemble pour le compresseur hermétique selon la revendication 9 ou 10, dans lequel la portion de fixation (58) est fixée à la surface du fond de cylindre (34) par une soudure.

12. Ensemble pour le compresseur hermétique selon la revendication 9, dans lequel la portion de liaison (62) est formée de manière à avoir une largeur supérieure à une largeur de la portion de liaison (56) de la soupape d'aspiration (36).

13. Ensemble pour le compresseur hermétique selon la revendication 9 ou 12, dans lequel la portion de liaison (62) est formée de manière à avoir une longueur plus courte qu'une longueur de la portion de liaison (56) de la soupape d'aspiration (36).

14. Ensemble pour le compresseur hermétique selon la revendication 9, dans lequel la portion d'ouverture/fermeture (60) est réalisée sous forme d'une plaque circulaire ayant un diamètre plus large qu'un diamètre du trou de décharge (50).

15. Ensemble pour le compresseur hermétique selon la revendication 1, dans lequel la portion de support comporte une première portion de support (68) pour soutenir une portion de liaison (62) de la soupape de décharge (38) et une deuxième portion de support (70) s'étendant depuis la première portion de support (68) de manière à être inclinée selon un certain angle pour limiter la gamme d'ouverture d'une portion d'ouverture/fermeture (60) de la soupape de décharge (38).

16. Ensemble pour le compresseur hermétique selon la revendication 1, comprenant:
- un premier organe de renforcement (72) mis entre le fond de cylindre (34) et le cylindre (26) dans le but de renforcer le fond de cylindre (34), et ayant un espace pour loger la soupape d'aspiration (36); et
- un deuxième organe de renforcement (74) mis entre le fond de cylindre (34) et la couverture de fond (40) dans le but de renforcer le fond de cylindre (34), et ayant un espace pour loger la soupape de décharge (38).

17. Ensemble pour le compresseur hermétique selon la revendication 16, dans lequel le premier organe de renforcement (72) est réalisé sous forme d'une plaque comportant une portion (76) d'installation de soupape d'aspiration poinçonnée de manière à avoir la même forme que la soupape d'aspiration (36) dans le but de positionner la soupape d'aspiration (36), et un trou de liaison (78) relié au trou de décharge (50) du fond de cylindre (34).

18. Ensemble pour le compresseur hermétique selon la revendication 16, dans lequel le deuxième organe de renforcement (74) est réalisé sous forme d'une plaque comportant une portion (80) d'installation de soupape de décharge poinçonnée de manière à avoir la même forme que la soupape de décharge (38) dans le but de positionner la soupape de décharge (38), et un trou de liaison (82) relié au trou d'aspiration (48) du fond de cylindre (34).
